# EUROPÄISCHE PATENTSCHRIFT

(11) **EP 0 846 364 B1**
(45) Veröffentlichungstag und Bekanntmachung des Hinweises auf die Patenterteilung: **15.12.1999**
(21) Anmeldenummer: 96920683.8
(22) Anmeldetag: 12.07.1996
(51) Int. Cl.: H02K 5/128

(54) **ELEKTROMOTOR**
ELECTRIC MOTOR
MOTEUR ELECTRIQUE

(30) Priorität: 24.08.1995 CH 242295
(43) Veröffentlichungstag der Anmeldung: 10.06.1998
(73) Patentinhaber: Sulzer Electronics AG, 8409 Winterthur (CH); LUST ANTRIEBSTECHNIK GmbH, 35633 Lahnau-Waldgirmes (DE)
(72) Erfinder: SCHÖB, Reto, CH-8604 Volketswil (CH)
(74) Vertreter: Heinen, Detlef
(86) Internationale Anmeldenummer: CH9600257
(87) Internationale Veröffentlichungsnummer: WO9708807

(56) Entgegenhaltungen:
- EP-A- 0 551 550
- DE-B- 1 965 543
- US-A- 4 730 989
- US-A- 5 325 006
- PATENT ABSTRACTS OF JAPAN vol. 16, no. 26 (M-1202), 22.Januar 1992 & JP,A,03 239442 (YASKAWA ELECTRIC), 25.Oktober 1991,

## Beschreibung

Die Erfindung betrifft einen Elektromotor, insbesondere einen Spaltrohr-Elektromotor gemäss dem Oberbegriff von Anspruch 1.

Ein Spaltrohr-Elektromotor ist üblicherweise ein flüssigkeitsgefüllter Asynchron-Kurzschlussläufermotor, dessen Läufer und Lagerung vom Fördermedium einer von diesem Motor angetriebenen Pumpe umspühlt ist. Die Statorwicklung des Spaltrohrmotors ist durch ein zylindrisches Rohr, dem sogenannten Spaltrohr, gegen die Förderflüssigkeit geschützt. Dadurch werden Isolations- und Korrosionsprobleme in der Statorwicklung umgangen (Siehe EP-A-0 551 550).

Probleme des bekannten Spaltrohrmotor sind darin zu sehen, dass der Wirkungsgrad wegen der Wirbelstromverluste im Spaltrohr und wegen der Spaltvergrösserung zwischen Rotor und Stator verschlechtert ist, und dass bei höherem Druckniveau die ausreichende Festigkeit des dünnwandigen Spaltrohrs problematisch ist.

Es ist Aufgabe der vorliegenden Erfindung diese Nachteile zu überwinden.

Diese Aufgabe wird gelöst mit einem Elektromotor gemäss den Merkmalen von Anspruch 1. Die Unteransprüche 2 bis 11 beziehen sich auf weitere, vorteilhafte Ausgestaltungen der Erfindung.

Der erfindungsgemässe Elektromotor zum Antrieb einer Kreiselpumpe weist einen Rotor mit einer Drehachse sowie einen Stator auf, wobei der Rotor hohlzylinderförmig, in Richtung der Drehachse verlaufend, als ein Aussenläufer ausgestaltet ist, und wobei der Stator innenliegend im Rotor angeordnet ist, und wobei zumindest die dem Rotor zugewandte Oberfläche des Stators von einem flüssigkeitsundurchlässigen Mittel umgeben ist.

Dieser Elektromotor weist den Vorteil auf, dass das die Oberfläche des Stators umgebende, flüssigkeitsundurchlässige Mittel, welches aus einem Material wie Metall, Kunststoff oder ein keramischer Werkstoff besteht, nur auf Druck und somit nicht auf Zug belastet ist. Somit ist es möglich eine sehr dünne flüssigkeitsundurchlässige Schicht zu verwenden, da die Schicht die Kräfte unmittelbar auf den Stator überträgt, und selbst keine Kräfte aufnehmen muss. Sollte der Stator Hohlräume aufweisen, so können diese mit einem Mittel wie Öl oder Kunststoff gefüllt werden, sodass die Schicht auf einem derartigen Füllmittel aufliegt. Nebst den herkömmlich metallischen Materialien, welche für ein Spaltrohr verwendet wurden, eignen sich für die flüssigkeitsundurchlässige Schicht auch Kunststoffe und keramische Werkstoffe, sowie insbesondere auch elastische Materialien aus Kunststoff oder Metall. Vorteile des erfindungsgemässen Elektromotors sind darin zu sehen, dass das Spaltrohr sehr dünn ausgestaltbar ist, und dass die Wirbelstromverluste auf Grund der geringen Dicke der flüssigkeitsundurchlässigen Schicht und/oder auf Grund der Anwendung eines elektrisch nichtleitenden Materials für die flüssigkeitsundurchlässige Schicht gering sind.

Die Erfindung wird anhand von mehreren Ausführungsbeispielen beschrieben. Es zeigen:
- Fig. 1: Einen Längsschnitt durch einen Spaltrohrmotor mit einer Kreiselpumpe;
- Fig. 1a: einen Querschnitt durch Fig. 1 entlang der Linie A-A;
- Fig. 2: einen Längsschnitt durch ein weiteres Ausführungsbeispiel eines Spaltrohrmotors mit einer Kreiselpumpe;
- Fig. 3: einen Längsschnitt durch ein Ausführungsbeispiel mit symmetrisch angeordneten Spaltrohrmotoren mit einer dazwischenliegenden Kreiselpumpe;
- Fig. 4: einen Längsschnitt durch ein weiteres Ausführungsbeispiel eines Spaltrohrmotors mit einer Kreiselpumpe;
- Fig. 5: einen Längsschnitt durch ein weiteres Ausführungsbeispiel eines Spaltrohrmotors mit einer Kreiselpumpe.

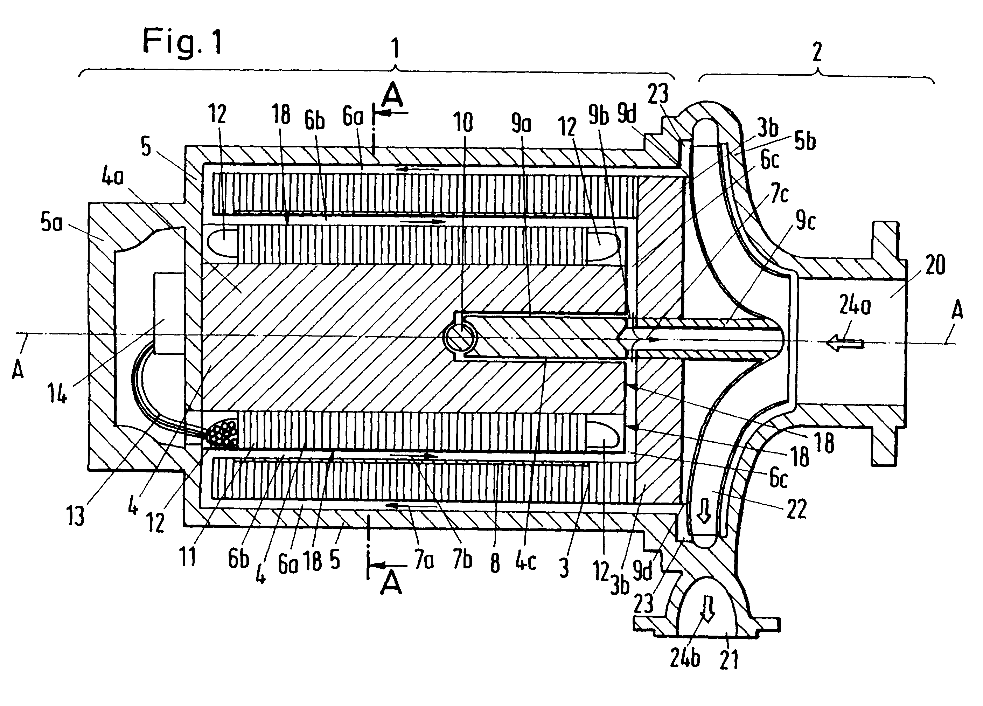

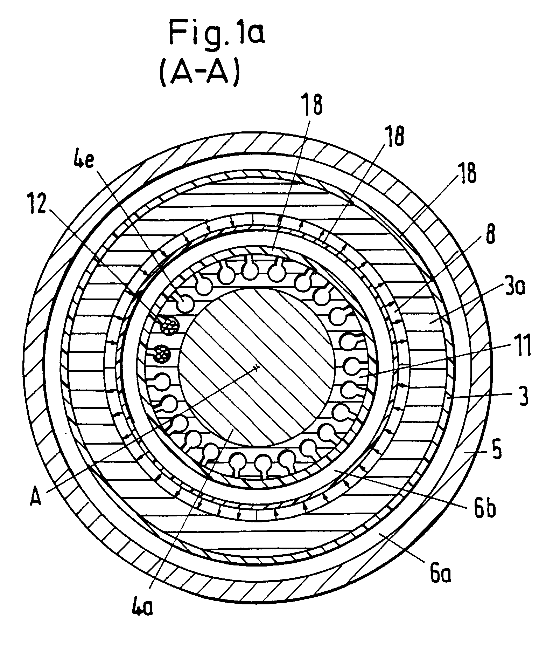

Fig. 1 zeigt einen mit einem Aussenläufer 3 ausgestalteten Elektromotor 1, welcher über eine Welle 9c mit einer Kreiselpumpe 2 verbunden ist. Die Kreiselpumpe 2 saugt über die Einlassöffung 20 eine in Richtung 24a strömende Flüssigkeit an, und fördert diese mittels einem rotierenden Laufrad 22 in Richtung 24b strömend zum Auslass 21. Der Elektromotor 1 sowie die Kreiselpumpe 2 weisen eine gemeinsame Drehachse A auf. Der Stator 4 des Elektromotors 1 ist innenliegend angeordnet und weist einen Kern 4a aus magnetisch leitendem Material, insbesondere Eisen, auf, an dessen Oberfläche in radialer Richtung verlaufende Eisenbleche 11 angeordnet sind, in welche elektrische Leiter 12 eingelegt sind, in der bei Elektromotoren üblichen Art. Alle Eisenbleche 11 zusammen bilden ein Statorblechpaket. Diese elektrischen Leiter 12 sind derart angeordnet, dass ein elektromagnetisches Drehfeld erzeugbar ist, um den aussenliegenden Rotor 3 in eine Rotation zu versetzen. Der Stator 4 weist eine zylinderförmige Ausnehmung 4c zur Aufnahme eines Spurlagers 10 auf. Die Kreiselpumpe 2 erzeugt während dem Förderbetrieb eine in Flussrichtung 24a wirkende Kraft, welche über die Welle 9c,9a und das Spurlager 10 auf den Stator 4 übertragen wird. Der Stator 4 ist von einem als Aussenläufer ausgestalteten, hohlzylinderförmigen Rotor 3 umgeben, welcher auf der dem Stator 4 zugewandten, axial verlaufenden Innenfläche angeordnete Permanentmagnete 8 aufweist. Der Rotor 3 kann auch derart ausgestaltet sein, dass sich zusammen mit dem Stator 4 ein Induktionsmotor oder ein Reluktanzmotor ergibt. Der hohlzylinderförmige Rotor 3 weist an dem der Kreiselpumpe 2 zugewandten Ende ein scheibenförmiges Abschlussteil 3b auf, welches mit der Welle 9c verbunden ist, um das Laufrad 22 anzutreiben. Der Rotor 3 kann zudem eine hohlzylinderförmige Verbindung 9d aufweisen, welche das scheibenförmige Abschlussteil 3b mit der Kreiselpumpe 2 verbindet, wobei das Verbindungsteil 9d im gemäss Fig. 1 dargestellten Ausführungsbeispiel einen Durchmesser entsprechend dem Aussendurchmesser des Rotors 3 aufweist.

Der Elektromotor 1 sowie die Kreiselpumpe 2 sind von einem gemeinsamen, druckfesten Gehäuse 5 umgeben. Der Elektromotor 1 ist als ein Spaltrohrmotor ausgestaltet, indem zumindest die dem Rotor 3 zugewandte Oberfläche des Stators 4 beziehungsweise der Lamellen 11 mit einem fluid- oder flüssigkeitsundurchlässigen Mittel 18 bzw. mit einer Schicht 18 umschlossen sind. Diese Schicht 18 kann insbesondere aus einem Metall oder einem Kunststoff bestehen, insbesondere aus einem korrosionsbeständigen Material.
Die derart ausgebildete Spaltrohrmotorpumpe 1,2 weist eine Öffnung 23 für einen Flüssigkeitsdurchtritt auf, sodass die Flüssigkeit ausgehend vom Hochdruckteil der Pumpe 2 vorerst in axialer Richtung 7a zwischen dem Rotor 3 und der Gehäuse 5 fliesst, danach in entgegengesetzter, axialer Richtung 7b zwischen dem Rotor 3 und dem Stator 4 zurückfliesst, und dabei für den Rotor 3 ein hydrodynamisches Radiallager ausbildet. Die Flüssigkeit strömt weiter, in einer zur Drehachse A radialen Richtung verlaufend zwischen dem Stator 4 und der Scheibe 3b gegen die Drehachse A hin, wobei sich zwischen der Stirnfläche des Stators 4 und der gegenüberliegenden Fläche der Scheibe 3b ein hydrodynamisches Axiallager für den Rotor 3 ausbildet. Die Flüssigkeit strömt über eine Öffnung 9b in die Welle 9c hinein, und weiter durch die hohle Welle 9c hindurch zum Einlass 20 der Kreiselpumpe 2 hin. Die Welle 9c weist ein Verlängerungsteil 9a auf, welches in der zylinderförmigen Ausnehmung 4c des Stators 4 mit einem Spurlager 10 gelagert ist. Das Spurlager 10 wird insbesondere zum Anlauf der Kreiselpumpe 2 benötigt, wogegen während dem Förderbetrieb das zwischen dem Stator 4 und der Scheibe 3b ausgebildete hydrodynamische Axiallager genügt, um die in axialer Richtung wirkenden Kräfte zu kompensieren.

Das scheibenförmige Abschlussteil 3b kann auch ohne Durchbrechung 9b mit der Welle 9a,9c verbunden sein. Dadurch werden die Spalten 6a,6b mit Flüssigkeit gefüllt, es tritt in axialer Richtung A jedoch eine Flussrichtung 7a, 7b auf. Somit weist der Rotor 3 eine insbesondere in radialer Richtung wirkende hydrodynamische Lagerung auf.

Der Rotor 3 kann wie dargestellt mit Permanentmagneten 8 bestückt sein, oder als ein Käfigläufer oder ein Reluktanzläufer ausgebildet sein.

Ein Stator 4 kann Hohlräume aufweisen, wie zum Beispiel bei den elektrischen Leitern 12, im Endbereich des Stators 4. Derartige Hohlräume lassen sich mit einem Füllmaterial wie einem Giessharz oder mit einem Öl füllen, sodass die flüssigheitsundurchlässige Schicht auch auf dem Füllmaterial aufliegt.

Ein Vorteil des erfindungsgemässen Elektromotors 1 ist darin zu sehen, dass die flüssigkeitsundurchlässige Schicht 18 auf der Oberfläche des zylinderförmig ausgestalteten Stators 4 angeordnet ist. Da diese Schicht 18 ausschliesslich einer Druckbelastung ausgesetzt ist, kann diese Schicht 18 sehr dünn ausgestaltet sein und/oder aus einem elastischen Material wie einem Kunststoff bestehen. Ein weiterer Vorteil des Elektromotors 1 ist darin zu sehen, dass die im Spalt 6a,6b,6c fliessende Flüssigkeit einen sehr hohen Druck aufweisen kann, ohne die flüssigkeitsundurchlässige Schicht 18 zu beschädigen. Ein weiterer Vorteil des Elektromotors 1 ist darin zu sehen, dass der Kern 4a des Stators 4 auch aus einer Keramik herstellbar ist, sodass der Stator 4 eine hohe Druckfestigkeit aufweist sowie das Spurlager 10 vorteilhafte Lagereigenschaften aufweist.

Fig. 1a zeigt einen Querschnitt durch Fig. 1 entlang der Linie A-A. Der Rotor 4 weist eine Mehrzahl von parallel zur Achse A verlaufenden Ausnehmungen 4e beziehungsweise Nuten 4e auf. Im Querschnitt gemäss Fig. la sind zur Vereinfachung der Darstellung nur in wenigen Nuten 4e die eingelegten elektrischen Leiter 12 dargestellt. Es weisen jedoch bei zusammengesetztem Motor alle Nuten 4e einen eingelegten elektrischen Leiter 12 auf. Die Leiter 12 können derart angeordnet und ansteuerbar sein, dass sie mit einem Drehstrom betreibbar sind und dabei im Stator 4 ein sich drehendes Magnetfeld entsteht. Die in Fig. 1 nicht dargestellt, dünne fluid- oder flüssigkeitsundurchlässige Schicht 18 ist aus Fig. la ersichtlicht. Der Rotor 3 weist von aussen nach innen hin zuerst eine fluid- oder flüssigkeitsundurchlässige Schicht 18 auf, gefolgt von einem Rotorblechpaket 3a, einer Schicht von Permanentmagneten 8 und einer abschliessend auf den Permanentmagnenten 8 aufliegenden, fluid- oder flüssigkeitsundurchlässigen Schicht 18. Bei den Permanentmagneten 8 sind mit Pfeilen die Richtung der Magnetisierung dargestellt, wobei die Magnetisierung in radialer Richtung verläuft, und wobei einzelne Permanentmagnete 8 in Umfangsrichtung derart nebeneinander angeordnet sind, dass Bereiche mit radial nach Aussen und Bereiche mit radial nach Innen weisender Magnetisierung entstehen. Das Statorblechpaket 11 sowie die Nuten 4e sind gegen den Spalt 6b hin mit einer fluid- oder flüssigkeitsundurchlässigen Schicht 18 überzogen, sodass der gesamte Stator vor einer im Spalt 6b befindlichen Flüssigkeit geschützt ist.

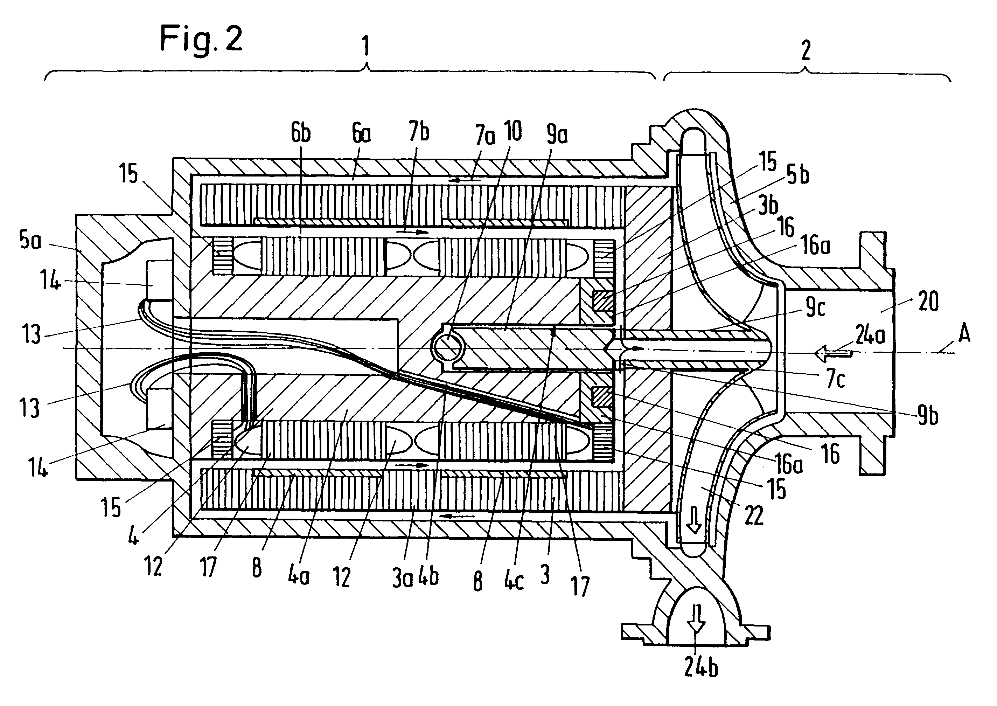

Fig. 2 zeigt ein weiters Ausführungsbeispiel eines Elektromotors 1, welcher über eine Welle 9c mit dem rotierenden Rad 22 einer Kreiselpumpe 2 verbunden ist. Dieser Elektromotor 1 weist zwei in Richtung der Achse A nebeneinander angeordnete sogenannte lager lose Motorn auf. Ein derartiger lagerloser Motor erzeugt ein Drehmoment in Antriebsrichtung sowie eine Kraft in radialer Richtung, um den Rotor 4 kontaktlos zu lagern. Der Stator 4 eines derartigen lager losen Motors weist eine Wicklung 12 mit einer Polpaarzahl p auf sowie eine Steuerwicklung zur Kompensation von axial und/oder radial zur Drehachse A wirkenden Kräften mit einem Wicklungszahl von p ± 1. Im Stator sind weiter Sensoren 15 mit integriertem Positionssensor angeordnet, um die Lage des Rotors 3 relativ zum Stator 4 zu erfassen und einer nicht dargestellten Regelvorrichung weiterzuleiten. Der Stator 4 weist Kanäle 4b auf zur Aufnahme elektrischer Leiter 13, welche ausgehend von einer Verteilvorrichtung 14 den Wicklungen 12 sowie den Sensoren 15 zugeführt werden. Die Signale der Sensoren 15 werden von einer Messvorrichtung erfasst und einer Regelvorrichtung zugeführt, welche über eine Stellvorrichtung und der nachgeschalteten Verteilvorrichtungen 14 die Wicklungen 12 sowie die Steuerwicklungen entsprechend ansteuert. Eine nicht dargestellte Steuerelektronik erfasst die Werte der Sensoren 15, und steuert die Steuerwicklungen derart an, dass die Lage des Rotors 3 in radialer und/oder in axialer Richtung geregelt wird, derart, dass der Rotor 3 sowie die damit verbundene Kreiselpumpe 2 mit Rad 22 frei drehen können. Diese Art der Magnetlagerung ist insbesondere beim Anlaufen und Auslaufen der Kreiselpumpe 2 vorteilhaft, weil in diesen Betriebszuständen die Flüssigkeit einen relativ kleinen Druck aufweist, sodass durch die im Spaltrohr 6a,6b fliessende Flüssigkeit 7a,7b nicht gewährleistet ist, dass sich der Rotor 3 und der Stator 4 nicht gegenseitig berühren. Das aktiv geregelte Magnetlager verhindert insbesondere bei Stillstand des Motors ein gegenseitiges berühren von Rotor 3 und Stator 4, wobei bei grösseren auftretenden Kräften ein Notlauf lager 10 bzw. ein Spurlager 10 vorgesehen ist, um die einwirkenden Kräfte auf den Stator 4 zu übertragen. Es kann sich als vorteilhaft erweisen am Stator 4 ein aktives Axialmagnetlager anzuordnen. Fig. 2 zeigt an der Stirnfläche des zylinderförmigen Stators 4 ein ringförmig ausgestaltetes aktives Magnet mit einer Ringwicklung 16, angeordnet in einem magnetisch gut leitfähigen Abschlussteil 16a. Dieses aktive Magnet mit Ringwicklung 16 erlaubt den Rotor 3 gegen den Stator 4 hin zu ziehen. Dabei erzeugt die sich zwischen dem scheibenförmigen Abschlussteil 16a des Stators 4 und dem scheibenförmigen Abschluss 3b des Rotors 3 befindliche Flüssigkeit ein hydrodynamisches Lager mit einer zur Kreiselpumpe 22 hin wirkenden Kraft. Das aktive Magnet mit Ringwicklung 16 bewirkt eine zu dieser entgegengesetzten Kraft. Der Abstand zwischen den beiden Abschlussteilen 3b, 16a wird von einem Sensor 15 überwacht. Dieses Sensorsignal wird einer nicht dargestellten Regelvorrichtung zugeführt, welche das aktive Magnet mit Ringwicklung 16 entsprechend den Vorgabewerten ansteuert.

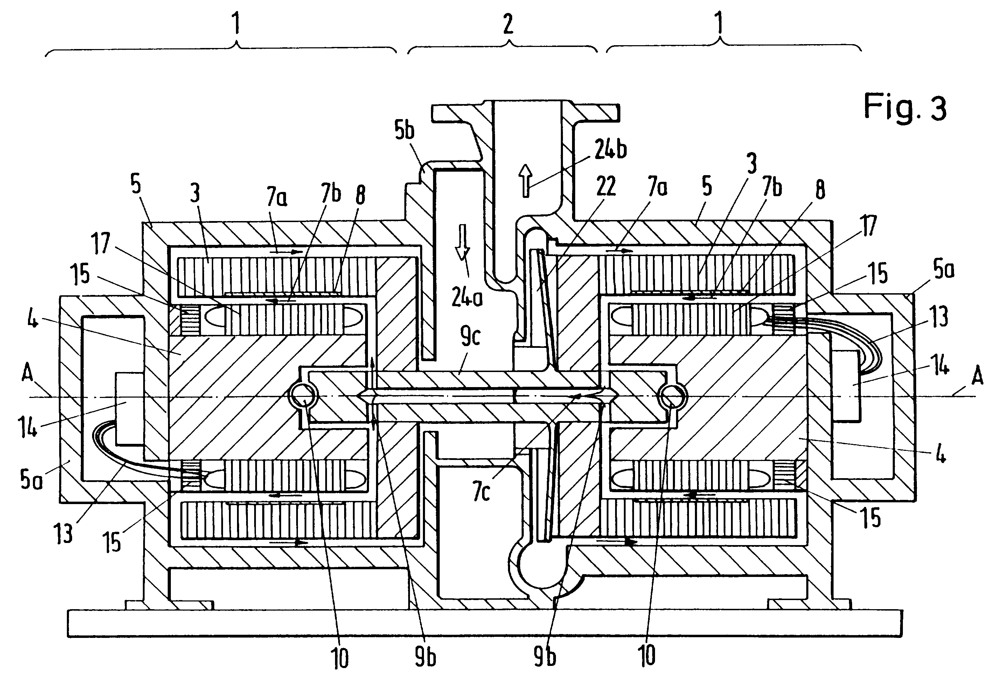

Fig. 3 zeigt ein weiterer Ausführungsbeispiel eines Spaltrohrmotors mit zwei symmetrisch angeordneten Statoren 4 sowie zwei über eine gemeinsame Welle 9c verbundene Rotoren 3. Die Kreiselpumpe ist an der gemeinsamen Welle 9c befestigt. Die Kreiselpumpe 2 sowie die Spaltrohrmotoren 1 sind gemeinsam in einem druckfesten Gehäuse 5, 5a, 5b angeordnet. An der Oberfläche des Stators 4 ist wiederum eine flüssigkeitsundurchlässige Schicht angeordnet. Der Spaltstrom fliesst ausgehend von der Druckseite 24b in axialer Richtung 7a verlaufend zwischen dem Gehäuse 5 und dem Rotor 3, weiter in entgegengesetzter Richtung 7b fliessend zwischen dem Rotor 3 und dem Stator 4, und mündet über eine Öffnung 9b in die Welle 9c, durchfliesst die Welle 9c in deren Zentrum in axialer Richtung verlaufend, tritt beim links angeordneten Motor 1 über die Öffnung 9b zwischen dem Rotor 3 und dem Stator 4 fliessend wieder aus, und fliesst anschliessend zwischen dem Gehäuse 5 und dem Rotor 3 zur Saugseite 24a der Kreiselpumpe 2 hin. Dadurch wird eine hydrodynamische Lagerung erzielt. Im Ausführungsbeispiel gemäss Fig. 3 sind die beiden Elektromotoren 1 als lagerlose Motoren, wie in Fig. 2 beschrieben, aufgeführt. Ein Vorteil der Ausführung gemäss Fig. 3 ist darin zu sehen, dass die symmetrische Anordnung der Motoren 1 kleinere Lagerkräfte bewirkt, dass der Hebelarm zwischen der Kreiselpumpe 2 und dem Motor 1 kürzer Ausfällt, und dass es dadurch möglich ist, auf einfache Weise eine mehrere Druckstufen aufweisende Pumpe zwischen den Motoren 1 angeordnet zu betreiben.

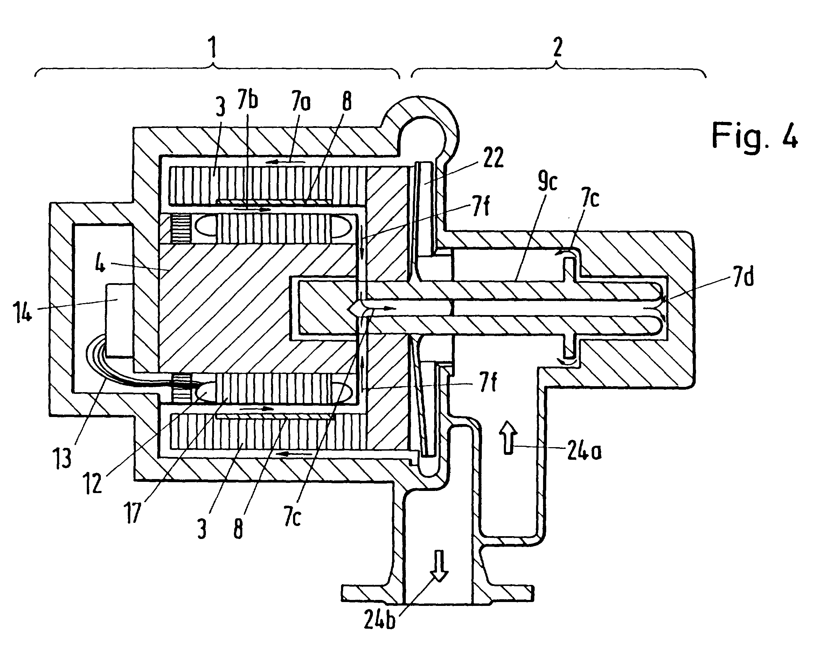

Fig. 4 zeigt ein weiteres Ausführungsbeispiel einer durch einen Elektromotor 1 angetriebenen Kreiselpumpe 2. Dieser Elektromotor 1 ist wiederum als ein Spaltrohrmotor ausgebildet mit einem innenliegenden Stator 4 sowie einem aussenliegenden Rotor 3. Der Spaltrohrmotor weist wiederum ein durch die Fluidströme 7a, 7b ausgebildetes Radiallager sowie ein durch die in radialer Richtung fliessenden Fluidstörme 7f bewirktes hydrodynamisches Axiallager auf, wobei das Fluid in einer im Zentrum der Welle 9c angeordneten Ausnehmung in axialer Richtung nach rechts in ein hydraulisches Lager strömt. Das Fluid strömt in Richtung 7d und 7e zur Saugseite 24a der Kreiselpumpe zurück. Das auf der rechten Seite angeordnete hydraulische Lager bewirkt ebenfalls eine Lagerung der Welle 9c in radialer und axialer Richtung. Im Ausführungsbeispiel gemäss Fig. 4 ist der Elektromotor 1 wiederum als ein lagerloser Motor ausgeführt.

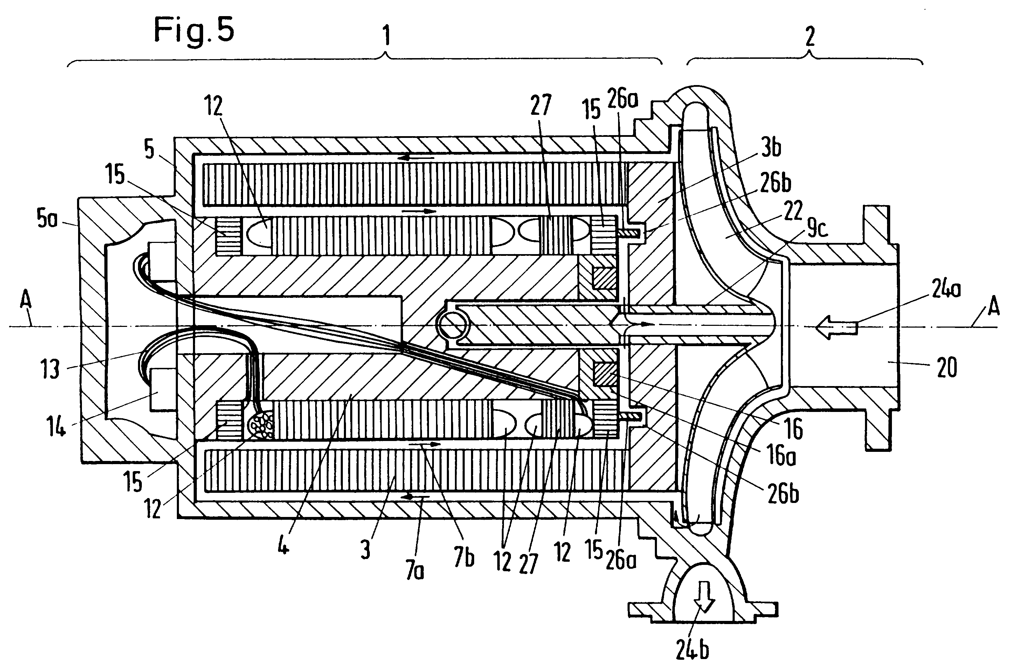

Fig. 5 zeigt ein weiteres Ausführungsbeispiel eines Elektromotors 1, welcher einen aussenliegenden Rotor 3 aufweist. Der Stator 4 weist auf der linken Seite einen lagerlosen Motor auf und auf der rechten Seite ein aktiv geregeltes Radialmagnetlager 27. Zudem weist der Stator ein aktiv geregeltes Axialmagnetlager 16, 16a auf. Die Sensoren 15 überwachen die Lage des Rotors 3 relativ zum Stator 4. Der scheibenförmige Abschluss 3b des Rotors 3 weist eine ringförmige Ausnehmung 26b auf. Der Stator 4 weist dieser Ausnehmung 26b gegenüberliegend angeordnet ein ringförmig vorstehendes Teil 26a auf. Die beiden Komponenten 26a, 26b bilden zusammen ein passives Mittel 26a, 26b zur Regelung des hydrodynamischen Lagers. Die passiven Mittel 26a, 26b dienen zum Ausgleich der Lage des Rotors 3 bezüglich dem Stator 4 in axialer Richtung.

## Patentansprüche

1. Elektromotor, insbesondere Spaltrohr-Elektromotor für eine Kreiselpumpe, mit einem eine Drehachse (A) aufweisenden Rotor (3) sowie mit einem Stator (4),
dadurch gekennzeichnet,
dass der Rotor (3) hohlzylinderförmig, in Richtung der Drehachse (A) verlaufend, als ein Aussenläufer ausgestaltet ist, dass der Stator (4) innenliegend im Rotor (3) angeordnet ist, und dass zumindest die dem Rotor (3) zugewandte Oberfläche des Stators (4) von einem flüssigkeitsundurchlässigen Mittel umgeben ist.

2. Elektromotor nach Anspruch 1, dadurch gekennzeichnet, dass der Rotor (3) mittels einer hydrodynamischen Lagervorrichtung und/oder mittels einer mechanischen Lagervorrichtung und/oder mittels einer magnetischen Lagervorrichtung bezüglich dem Stator (4) gelagert ist.

3. Elektromotor nach Anspruch 2, dadurch gekennzeichnet, dass die hydrodynamische Lagervorrichtung als ein mit Flüssigkeit füllbarer Spalt (6b) zwischen einer Innenfläche des Rotors (3) und einer Aussenfläche des Stators (4) und/oder als ein mit Flüssigkeit füllbarer Spalt (6a) zwischen einer Aussenfläche des Rotors (3) und ein den Rotor (3) umgebendes Gehäuse (5) ausgebildet ist.

4. Elektromotor nach Anspruch 2, dadurch gekennzeichnet, dass der Stator (4) Motorwicklungen mit einer Polpaarzahl p sowie Steuerwicklungen mit einer Polpaarzahl p ± 1 aufweist, und dass der Elektromotor Sensoren (15) zur Erfassung der gegenseitigen Lage von Stator (4) und Rotors (3) aufweist.

5. Elektromotor nach Anspruch 2, dadurch gekennzeichnet, dass dieser eine in radialer und/oder axialer Richtung wirkende, magnetische Lagervorrichtung aufweist.

6. Elektromotor nach einem der Ansprüche 1 bis 5, dadurch gekennzeichnet, dass das flüssigkeitsundurchlässige Mittel aus einem Metall oder einem Kunststoff oder einem keramischen Werkstoff besteht.

7. Elektromotor nach einem der Ansprüche 1 bis 6, dadurch gekennzeichnet, dass dieser in Verlaufsrichtung der Drehachse (A) zwei nebeneinander angeordnete, nach dem Prinzip eines lagerlosen Motors ausgestaltete Lagervorrichtungen aufweist.

8. Elektromotor nach einem der Ansprüche 1 bis 6, dadurch gekennzeichnet, dass dieser in Verlaufsrichtung der Drehachse (A) ein nach dem Prinzip des lagerlosen Motors ausgestaltete Lagervorrichtung sowie eine zweite, magnetische Lagervorrichtung aufweist.

9. Elektromotor nach einem der Ansprüche 1 bis 6, dadurch gekennzeichnet, dass der Elektromotor zwei getrennte Statoren (4) und zwei über eine gemeinsame Achse (9c) verbundene Rotoren (3) aufweist, wobei an der gemeinsamen Achse (9c) eine Pumpvorrichtung, insbesondere eine Kreiselpumpe befestigbar ist.

10. Elektromotor nach einem der Ansprüche 1 bis 6, dadurch gekennzeichnet, dass der Rotor (3) mit einer Achse (9c) verbunden ist, welche in einem hydrodynamischen, mechanischen oder magnetischen Lager gelagert ist, wobei eine Pumpvorrichtung, insbesondere eine Kreiselpumpe, an der gemeinsamen Achse (9c) befestigbar ist.

11. Kreiselpumpe mit einem Spaltrohr-Elektromotor nach einem der Ansprüche 1 bis 10.

## Claims

1. Electric motor, in particular a canned electric motor for a centrifugal pump, comprising a rotor (3) with an axis of rotation (A) and also a stator (4),
characterised in that the rotor (3) is designed as an outer rotor in the shape of a hollow cylinder extending in the direction of the axis of rotation (A); in that the stator (4) is arranged to lie within the rotor (3); and in that at least the surface of the stator (4) which is near the rotor (3) is surrounded by a means which is impermeable to liquid.

2. Electric motor in accordance with claim 1, characterised in that the rotor (3) is suspended with respect to the stator (4) by means of a hydrodynamic bearing apparatus and/or by means of a mechanical bearing apparatus and/or by means of a magnetic bearing apparatus.

3. Electric motor in accordance with claim 2 characterised in that the hydrodynamic bearing apparatus is designed as a gap (6b) which can be filled with a liquid between an inner surface of the rotor (3) and an outer surface of the stator (4) and/or as a gap (6a) which can be filled with a liquid between an outer surface of the rotor (3) and a housing (5) which surrounds the rotor (3).

4. Electric motor in accordance with claim 2 characterised in that the stator (4) has motor windings with a number of pole pairs p and control windings with a number of pole pairs p ± 1; and in that the electric motor has sensors (15) for the detection of the mutual position of the stator (4) and the rotor (3).

5. Electric motor in accordance with claim 2 characterised in that it has a magnetic bearing apparatus acting in the radial and/or axial direction.

6. Electric motor in accordance with one of the claims 1 to 5, characterised in that the means which is impermeable to liquid consists of a metal or of a plastic or of a ceramic material.

7. Electric motor in accordance with one of the claims 1 to 6, characterised in that it has two bearing apparatuses which are arranged adjacently in the direction of extent of the axis of rotation (A) in accordance with the principle of a bearing-free motor.

8. Electric motor in accordance with one of the claims 1 to 6, characterised in that it has a bearing apparatus, which is arranged in the direction of extent of the axis of rotation (A) and is designed in accordance with the principle of a bearing free motor, as well as a second, magnetic bearing apparatus.

9. Electric motor in accordance with one of the claims 1 to 6, characterised in that the electric motor has two separate stators (4) and two rotors (3) connected via a common axle (9c), with a pump apparatus, in particular a centrifugal pump, being securable to the common axle (9c).

10. Electric motor in accordance with one of the claims 1 to 6, characterised in that the rotor (3) is connected to an axle (9c) which is journalled in a hydrodynamic, mechanical or magnetic bearing, with a pump apparatus, in particular a centrifugal pump, being securable to the common axle (9c).

11. Centrifugal pump with a canned electric motor in accordance with one of the claims 1 to 10.

## Revendications

1. Moteur électrique, notamment moteur électrique à gaine pour une pompe centrifuge, avec un rotor (3) présentant un axe de rotation (A) ainsi qu'avec un stator (4), caractérisé en ce que le rotor (3) est réalisé en forme de cylindre creux, s'étendant en direction de l'axe de rotation (A), sous forme d'induit extérieur, en ce que le stator (4) est disposé en étant situé à l'intérieur dans le rotor (3) et en ce qu'au moins la surface du stator (4) orientée vers le rotor (3) est entourée par un moyen imperméable au liquide.

2. Moteur électrique selon la revendication 1, caractérisé en ce que le rotor (3) est logé au moyen d'un dispositif de palier hydrodynamique et/ou au moyen d'un dispositif de palier mécanique et/ou au moyen d'un dispositif de palier magnétique relativement au stator (4).

3. Moteur électrique selon la revendication 2, caractérisé en ce que le dispositif de palier hydrodynamique est réalisé comme une fente (6b) pouvant être remplie par un liquide, entre une face intérieure du rotor (3) et une face extérieure du stator (4) et/ou comme une fente (6a) pouvant être remplie par un liquide entre une face extérieure du rotor (3) et un boîtier (5) entourant le rotor (3).

4. Moteur électrique selon la revendication 2, caractérisé en ce que le stator (4) présente des enroulements de moteur avec un nombre de paires de pôles p ainsi que des enroulements de commande avec un nombre de paires de pôles p ± 1, et en ce que le moteur électrique présente des capteurs (15) pour détecter la position mutuelle du stator (4) et du rotor (3).

5. Moteur électrique selon la revendication 2, caractérisé en ce que celui-ci présente un dispositif de palier magnétique agissant dans la direction radiale et/ou axiale.

6. Moteur électrique selon l'une des revendications 1 à 5, caractérisé en ce que le moyen imperméable au liquide est constitué d'un métal ou d'une matière synthétique ou d'une matière céramique.

7. Moteur électrique selon l'une des revendications 1 à 6, caractérisé en ce que celui-ci présente dans la direction d'extension de l'axe de rotation (A) deux dispositifs de palier disposés l'un à côté de l'autre réalisés selon le principe d'un moteur sans palier.

8. Moteur électrique selon l'une des revendications 1 à 6, caractérisé en ce que celui-ci présente dans la direction d'extension de l'axe de rotation (A) un dispositif de palier réalisé selon le principe du moteur sans palier ainsi qu'un deuxième dispositif de palier magnétique.

9. Moteur électrique selon l'une des revendications 1 à 6, caractérisé en ce que le moteur électrique présente deux stators séparés (4) et deux rotors (3) reliés par un axe commun (9c), où peut être fixé à l'axe commun (9c) un dispositif formant pompe, notamment une pompe centrifuge.

10. Moteur électrique selon l'une des revendications 1 à 6, caractérisé en ce que le rotor (3) est relié à un axe (9c) qui est logé dans un palier hydrodynamique, mécanique ou magnétique, où un dispositif formant pompe, notamment une pompe centrifuge, peut être fixé à l'axe commun (9c).

11. Pompe centrifuge comportant un moteur électrique à gaine selon l'une des revendications 1 à 10.
